(19) Europäisches Patentamt

European Patent Office

Office européen des brevets

(11) EP 1 522 841 B1

(12) FASCICULE DE BREVET EUROPEEN

(45) Date de publication et mention
de la délivrance du brevet:
**27.12.2006 Bulletin 2006/52**

(51) Int Cl.:
***G01M 15/00*** (2006.01)

(21) Numéro de dépôt: **04292306.0**

(22) Date de dépôt: **27.09.2004**

(54) **Système de détection d'un râté de combustion pour un moteur de véhicule automobile**

System zur Erkennung von Fehlzündungen für einen Fahrzeugmotor

System to detect misfire for an internal combustion engine of a vehicle

(84) Etats contractants désignés:
**AT BE BG CH CY CZ DE DK EE ES FI FR GB GR
HU IE IT LI LU MC NL PL PT RO SE SI SK TR**

(30) Priorité: **07.10.2003 FR 0311732**

(43) Date de publication de la demande:
**13.04.2005 Bulletin 2005/15**

(73) Titulaire: **Peugeot Citroën Automobiles S.A.
78140 Vélizy Villacoublay (FR)**

(72) Inventeur: **Boatas, Armand
92350 Le plessis Robinson (FR)**

(74) Mandataire: **Habasque, Etienne J. Jean-François
et al
Cabinet Lavoix
2, Place d'Estienne d'Orves
75441 Paris Cédex 09 (FR)**

(56) Documents cités:
**EP-A- 0 736 760          US-A- 5 732 382
US-B1- 6 199 057          US-B1- 6 292 738
US-B1- 6 434 541**

**Description**

La présente invention concerne un système de détection d'un raté de combustion d'un moteur thermique d'un véhicule automobile.

Lors d'une combustion incomplète, des hydrocarbures, considérés comme polluants et dont les émissions sont réglementées, sont émis en excès dans l'atmosphère.

Pour limiter ces émissions, des législations anti-pollution imposent de détecter les ratés de combustion et de modifier les paramètres de contrôle du fonctionnement du moteur lorsque leur nombre dépasse des seuils prédéfinis.

De plus, lorsqu'un raté de combustion conduit au rejet d'hydrocarbures imbrûlés dans le pot catalytique, la détérioration de celui-ci peut s'accélérer.

Il est connu, notamment par le document US 6,434,541, un système de détermination d'un raté de combustion. Ce système comprend un processeur neuronal exécutant une topologie de réseau reconfigurable comprenant plusieurs couches cachées contenant des neurones interconnectés selon une configuration récurrente.

L'invention a pour but de proposer un système alternatif de détection d'un raté de combustion.

A cet effet, l'invention a pour objet un système de détection d'un raté de combustion d'au moins un cylindre d'un moteur thermique d'un véhicule automobile, comprenant :

- des moyens d'acquisition d'informations de charge du moteur,
- des moyens d'acquisition d'informations de vitesse du vilebrequin,
- des moyens de calcul du régime moyen de rotation du moteur à partir des informations de vitesse du vilebrequin,
- des moyens de détermination d'informations représentatives du couple indiqué du cylindre du moteur,
- des moyens neuronaux de traitement des informations de charge du moteur, des informations représentatives du couple indiqué et des informations de régime moyen de rotation du moteur pour détecter un raté de combustion, caractérisé en ce que :
- les moyens de détermination d'informations représentatives du couple indiqué sont adaptés pour délivrer n informations élémentaires représentatives du couple indiqué correspondant à n pas de mesure successifs du couple indiqué générés lors d'une combustion dans un cylindre, et en ce que
- les moyens neuronaux comprennent un premier et un second étages neuronaux indépendants l'un de l'autre, le premier étage recevant en entrée les n informations élémentaires représentatives du couple indiqué et le second étage recevant en entrée les informations de charge du moteur et de régime moyen de rotation du moteur afin d'optimiser le traitement des informations et la détection d'un raté de combustion.

Un tel système est simple et permet de réaliser une détection d'un raté de combustion avec un temps de calcul relativement court.

Suivant des modes particuliers de réalisation, le système de détection d'un raté de combustion comporte l'une ou plusieurs des caractéristiques suivantes :

- les moyens de détermination d'informations représentatives du couple indiqué comprennent des moyens de calcul d'informations de fluctuation de la vitesse et les n informations élémentaires comprennent n informations de fluctuation de la vitesse, une information de fluctuation étant calculée à partir de la différence entre une vitesse du vilebrequin sur une course prédéfinie de rotation du vilebrequin et une vitesse du vilebrequin moyennée sur une course correspondant à un demi-tour de rotation du vilebrequin ;
- les moyens de détermination d'informations représentatives du couple indiqué comprennent un accéléromètre et les n informations élémentaires comprennent n informations d'accélération mesurées lors de la rotation du vilebrequin sur une course prédéterminée ;
- les moyens de détermination d'informations représentatives du couple indiqué comprennent un capteur de pression des gaz d'échappement du cylindre du moteur et les n informations élémentaires comprennent n informations de variation de la pression, une information de variation de la pression étant calculée à partir de la différence entre une pression d'échappement sur une course prédéfinie de rotation du vilebrequin et une pression d'échappement moyennée sur une course correspondant à un demi-tour de rotation du vilebrequin ;
- les moyens d'acquisition d'informations de vitesse du vilebrequin comprennent des moyens d'acquisition d'informations de la position angulaire du vilebrequin ;
- les moyens d'acquisition d'informations de vitesse et de position angulaire du vilebrequin comprennent une roue codée reliée au vilebrequin et une sonde correspondante ;
- les moyens neuronaux sont composés d'une couche de neurones d'entrée, d'une unique couche de neurones cachée et d'une couche de neurones de sortie ;
- le premier et le second étages comprennent chacun des neurones de la couche d'entrée et de la couche cachée ;
- les moyens neuronaux sont statiques ;

- le premier étage reçoit en outre en entrée un signal inverse du régime moyen de rotation du moteur dont le signe varie en fonction du segment angulaire de la roue codée utilisé pour faire la mesure dans le but d'en corriger la dissymétrie ;
- le premier étage reçoit en outre en entrée un signal inverse du régime moyen de rotation du moteur au carré dont le signe varie en fonction du segment angulaire de la roue codée utilisé pour faire la mesure dans le but d'en corriger la dissymétrie ;
- les moyens neuronaux et les moyens de calcul sont implantés dans un calculateur multifonctions du moteur.

L'invention sera mieux comprise à la lecture de la description qui va suivre, donnée uniquement à titre d'exemple et faite en se référant aux dessins, sur lesquels :

- la figure 1 est une représentation schématique d'un système de détection d'un raté de combustion d'un cylindre d'un moteur, selon l'invention ;
- la figure 2 est une représentation schématique d'un premier exemple de réalisation de moyens neuronaux utilisés dans le système selon l'invention ; et
- la figure 3 est une représentation schématique d'un second exemple de réalisation de moyens neuronaux utilisés dans le système selon l'invention.

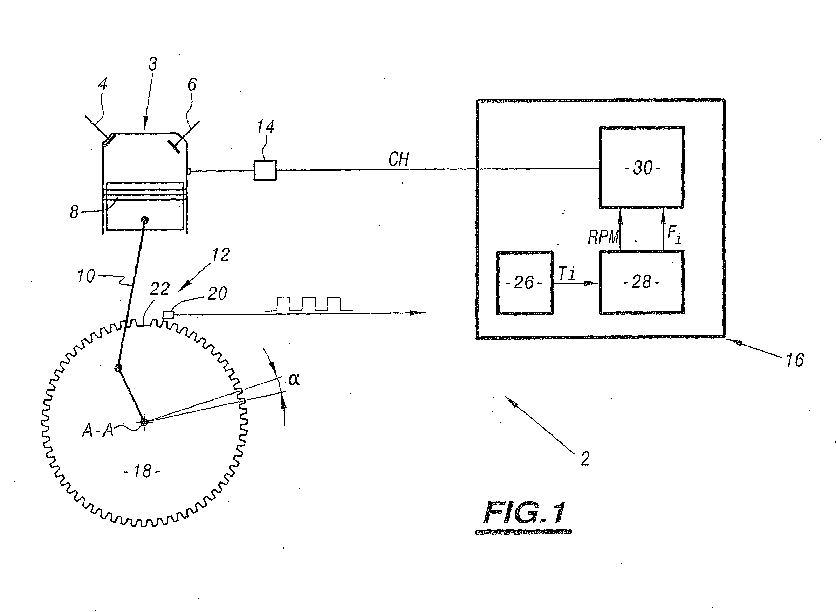

La figure 1 représente schématiquement un système 2 de détection d'un raté de combustion d'un cylindre 3 d'un moteur thermique de véhicule automobile.

Ce cylindre 3 comprend une soupape d'échappement 4 des gaz résiduels de la combustion et une soupape d'admission 6 d'air et de carburant. Il contient un piston 8 mobile, coulissant par mouvement alternatif, pendant les phases de fonctionnement du moteur. Ce piston 8 est relié par un mécanisme à bielles articulées 10 à un vilebrequin schématisé par son axe principal A-A.

Classiquement, les quatre temps de fonctionnement d'un moteur à combustion interne à quatre temps comprennent une phase d'admission de l'air et du carburant, une phase de compression de l'air et d'allumage du mélange par exemple à l'aide d'une bougie dans le cas d'un moteur à allumage commandé, une phase d'explosion et de détente des gaz brûlés et une phase d'échappement des gaz résiduels à la combustion.

Dans un moteur à quatre ou à six cylindres, chaque cylindre 3 entraîne le vilebrequin en rotation pendant sa phase de détente et est entraîné par les autres cylindres pendant les autres phases.

Au cours de la phase de détente, le piston 8 du cylindre 3 est apte à passer d'une position appelée point mort haut PMH à une position appelée point mort bas PMB et à entraîner le vilebrequin en rotation d'un demi-tour autour de son axe A-A.

Le système de détection 2 selon l'invention est apte à détecter un raté de combustion produit lors de la phase de détente d'un cylindre 3 d'un moteur par détection d'une baisse du couple indiqué transmis par le piston.

Le couple indiqué d'un cylindre d'un moteur est défini comme le couple mécanique produit sur le vilebrequin par la pression générée lors de la combustion.

Le système de détection 2 selon l'invention comporte un capteur de mesure 14 de la charge CH du moteur, des moyens d'acquisition 12 de la vitesse du vilebrequin et un calculateur 16 multifonctions du moteur.

Le capteur de mesure 14 de la charge CH du moteur est situé à la confluence des tubulures d'admission des cylindres 3 du moteur. Il est apte à mesurer la pression de l'air admis dans le cylindre 3.

Les moyens d'acquisition d'informations de vitesse du vilebrequin 12 comprennent un capteur de mesure de la position angulaire du vilebrequin. Ce capteur est formé dans l'exemple décrit par une roue codée 18 et une sonde correspondante 20.

La roue codée 18 est solidaire du vilebrequin. Elle peut par exemple, être fixée au volant moteur. Cette roue comprend par exemple cinquante huit dents disposées radialement à sa périphérie à des angles prédéfinis $\alpha$ de 6 degrés et un emplacement 22 où deux dents sont manquantes pour établir un point de référence par rapport à la position du point mort haut PMH de chaque piston des cylindres.

La sonde 20 est par exemple une sonde de type inductif. Elle est fixée à proximité et en vis à vis des dents de la roue 18 de manière à détecter leurs passages. Lors de la rotation du vilebrequin et de la roue codée, la sonde 20 est apte à générer un signal transformable en créneaux. La durée entre deux fronts des créneaux générés est égale au temps de passage de chaque segment angulaire devant la sonde.

Le calculateur multifonctions 16 du moteur comprend notamment des moyens de calcul 26, 28 du régime moyen de rotation du moteur, des moyens de détermination 26, 28 d'informations représentatives du couple indiqué du cylindre moteur et des moyens neuronaux 30.

Les moyens de calcul du régime moyen de rotation du moteur comprennent une horloge interne 26 et une unité de calcul 28.

L'horloge interne 26 est apte à recevoir le signal en forme de créneau émis par la sonde 20 et à mesurer la durée de chaque créneau. Lors d'une phase de détente, l'horloge est apte à mesurer les n valeurs élémentaires de durée $T_i$ correspondant chacune à un déplacement du vilebrequin de l'angle prédéfini $\alpha$.

A partir de ces n valeurs de durée $T_i$, l'unité de calcul 28 est apte à calculer le régime moyen de rotation du moteur RPM en utilisant l'algorithme suivant :

$$RPM = \frac{1/2}{\sum\limits_{i=1}^{30} T_i} \times 60 \text{ (en tours par minute)}$$

dans lequel $T_i$ est une mesure de la durée en seconde de rotation du vilebrequin sur une course correspondant à un angle $\alpha$ de 6°.

Le régime moyen de rotation du moteur RPM est défini comme la vitesse moyenne de rotation du vilebrequin. Il est calculé pendant une phase de détente du cylindre 3 correspondant à une course d'un demi-tour du vilebrequin.

Les moyens de détermination d'informations représentatives du couple indiqué comprennent l'horloge 26 et l'unité de calcul 28. A partir des n valeurs de durée $T_i$ mesurées par l'horloge 26, l'unité de calcul 28 est apte à calculer n informations élémentaires de fluctuation de vitesse $F_i$ du vilebrequin. Pour cela, l'unité de calcul 28 utilise les algorithmes suivants

$$T_{moy} = \sum_{i=1}^{30} \frac{T_i}{30}$$

:

$$F_i = T_i - T_{moy}$$

dans lesquels :

- $T_i$ est une mesure de durée en seconde de rotation du vilebrequin sur une course correspondant à un angle $\alpha$ de 6° ;
- $T_{moy}$ est une mesure de durée en seconde de rotation du vilebrequin moyennée sur une course d'un demi-tour de vilebrequin ;
- $F_i$ est une information élémentaire en seconde de fluctuation de la vitesse du vilebrequin ;

Chaque information élémentaire de fluctuation de vitesse $F_i$ est définie comme la différence entre une vitesse de rotation du vilebrequin sur une course correspondant à un angle $\alpha$ et une vitesse moyenne $T_{moy}$ du vilebrequin moyennée sur une course correspondant à un demi-tour de rotation du vilebrequin.

Dans ce mode de réalisation de l'invention, l'horloge 26 est apte à mesurer trente valeurs de durée $T_i$ correspondant au passage de trente dents de la roue codée 18, c'est à dire alternativement trente dents ou vingt-huit dents et les deux dents manquantes en fonction du segment angulaire utilisé pour la mesure. La durée de passage des dents manquantes est estimée à l'aide des durées mesurées lors du passage des dents précédentes et suivantes.

Alternativement, les moyens de détermination d'informations représentatives du couple indiqué comprennent un accéléromètre solidaire du bloc moteur. Cet accéléromètre est apte à délivrer n informations élémentaires d'accélération mesurées lors de la rotation du vilebrequin sur une course d'une demi-rotation du vilebrequin.

Alternativement également, les moyens de détermination d'informations représentatives du couple indiqué comprennent un capteur de pression des gaz d'échappement du cylindre 3 du moteur et l'unité de calcul 28. Le capteur de pression est fixé à la sortie des tubulures d'échappement et est apte à générer n informations sur la pression d'échappement des gaz brûlés. L'unité de calcul 28 est apte à calculer n informations élémentaires de variation de la pression d'échappement. Chaque information élémentaire de variation est calculée à partir de la différence entre une pression d'échappement sur une course correspondant à un angle $\alpha$ et une pression moyenne sur une course correspondant à un demi-tour de rotation du vilebrequin.

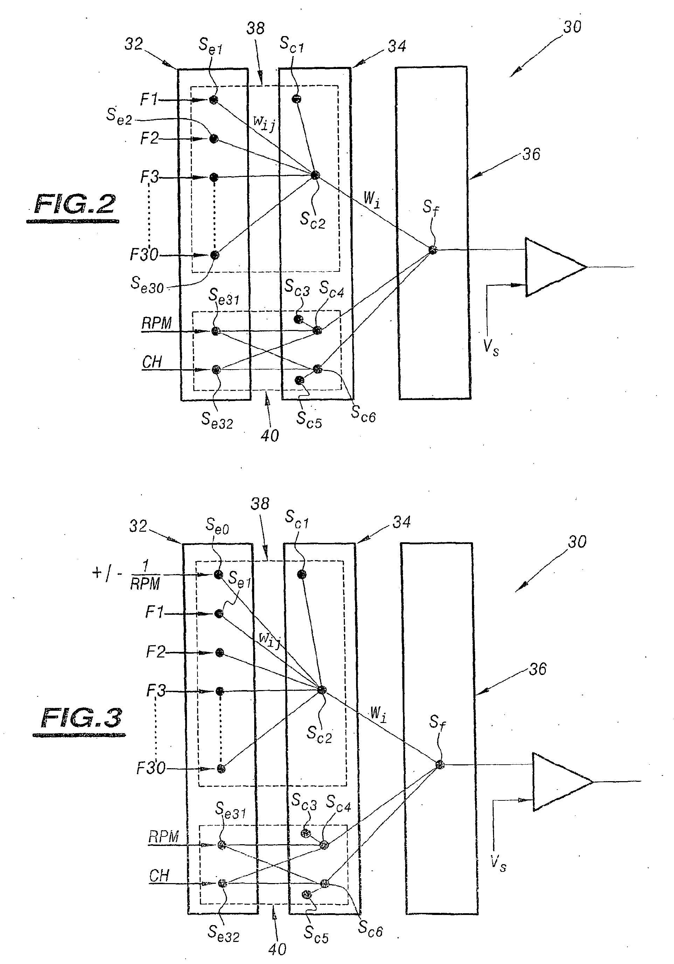

Les moyens neuronaux 30 sont formés par un réseau tel qu'illustré sur la figure 2. Ce réseau est statique et est composé d'éléments de traitement basiques appelés des neurones $S_{e1}$, ..., $S_{e30}$. Les neurones sont disposés dans une couche d'entrée 32, une unique couche cachée 34 et une couche de sortie 36.

Chaque neurone d'une couche est associé à chaque neurone d'une autre couche par l'intermédiaire de poids $w_{ij}$. La sortie d'un neurone est une combinaison linéaire des neurones qui sont connectés à ce neurone et de tous les poids $w_{ij}$ de ces connexions.

Chaque neurone comprend en outre une fonction d'activation telle que par exemple la fonction sigmoïde :

$$f(x) = \frac{1}{1 + e^{-x}}$$

pour x appartenant aux nombres réels.

La couche d'entrée 32 et la couche cachée 34 sont composées d'un premier 38 et d'un second 40 étages.

Le premier étage 38 de la couche d'entrée 32 comprend trente neurones $S_{e1},..,S_{e30}$ qui reçoivent en entrée des signaux correspondant aux informations représentatives du couple indiqué du cylindre du moteur. Dans le cas représenté sur la figure 1, ces informations comprennent n informations élémentaires de fluctuation de vitesse $F_i$ du vilebrequin pour i allant de 1 à 30.

Le premier étage 38 de la couche cachée 34 comprend un neurone $S_{c2}$, et une entrée supplémentaire $S_{c1}$ appelé biais. Cette entrée est équivalente à une constante égale à 1. Le neurone $S_{c2}$ délivre un signal de sortie de la forme :

$$S_{c2} = f\left( \sum_{i=1}^{30} w_{2,i} F_i + w_{2,C1} \right)$$

où $w_{2,i}$ représentent les poids des interconnexions entre le neurone $S_{c2}$ et les neurones d'entrée Fi pour i allant de 1 à 30 ;

$W_{2,c1}$ représente le poids de la connexion entre le neurone $S_{c2}$ et le biais $S_{c1}$ de la couche cachée 34 ; et

f est la fonction sigmoïde (décrite ci-dessus).

Le second étage 40 de la couche d'entrée 32 comprend deux neurones $S_{e31}$, $S_{e32}$ qui reçoivent en entrée des signaux correspondant respectivement aux informations de régime moyen RPM du moteur et de charge moteur CH .

Le second étage 40 de la couche cachée 34 comprend deux neurones $S_{c4}$, $S_{c6}$ et deux biais $S_{c3}$, $S_{c5}$. Les deux biais sont chacun égaux à 1. Le neurone $S_{c4}$ est connecté aux deux neurones $S_{e31}$, $S_{e32}$ de la couche d'entrée et au biais $S_{c3}$. Le neurone $S_{c6}$ est également connecté aux deux neurones $S_{e31}$, $S_{e32}$ de la couche d'entrée et au biais $S_{c5}$. Les neurones $S_{c4}$, $S_{c6}$ délivrent un signal de sortie de la forme :

$$S_{c4} = f(w_{4,31}RPM + w_{4,32}CHARGE + w_{4,C3})$$

$$S_{c6} = f(w_{6,31}RPM + W_{6,32}CHARGE + W_{6,C5})$$

où $w_{4,31}$ représente le poids de l'interconnexion entre le neurone $S_{c4}$ et le neurone $S_{e31}$,

$W_{4,32}$ représente le poids de l'interconnexion entre le neurone $S_{c4}$ et le neurone $S_{e32}$,

$W_{4,C3}$ représente le poids de l'interconnexion entre le neurone $S_{c4}$ et le biais $S_{c3}$,

$W_{6,31}$ représente le poids de l'interconnexion entre le neurone $S_{c6}$ et le neurone $S_{e31}$ ;

$W_{6,32}$ représente le poids de l'interconnexion entre le neurone $S_{c6}$ et le neurone $S_{e32}$ ;

$W_{6,C5}$ représente le poids de l'interconnexion entre le neurone $S_{c6}$ et le biais $S_{c5}$ ; et

f est la fonction sigmoïde.

Le premier 38 et le second 40 étages sont indépendants l'un de l'autre. Les poids $w_{ij}$ associés aux relations entre les neurones $S_{e1}$, $S_{e2}$,..$S_{e30}$ de la couche d'entrée 32 du premier étage 38 et les neurones $S_{c3}$, $S_{c4}$, $S_{c5}$, $S_{c6}$ de la couche cachée 34 du second étage 40 sont nuls. De même, les poids associés aux relations entre les neurones $S_{e31}$, $S_{e32}$ de la couche d'entrée 32 du second étage 40 et les neurones $S_{c1}$, $S_{c2}$ de la couche cachée 34 du premier étage 38 sont nuls.

Les neurones du premier 38 et du second 40 étages de la couche cachée 34 sont couplés au neurone final $S_f$ de la couche de sortie 36. Ce neurone $S_f$ est apte à générer un signal de réponse aux signaux d'entrée fournis aux neurones de la couche d'entrée. Il est connecté aux neurones $S_{c2}$, $S_{c4}$, $S_{c6}$ du premier et du second étage de la couche cachée 38. Il délivre un signal de sortie de la forme :

$$S_f = f(W_1 S_{C2} + W_2 S_{C4} + W_3 S_{c6})$$

où $W_1$ représente le poids de l'interconnexion entre le neurone $S_{c2}$ et le neurone $S_f$ ;
$W_2$ représente le poids de l'interconnexion entre le neurone $S_{c4}$ et le neurone $S_f$;
$W_3$ représente le poids de l'interconnexion entre le neurone $S_{c6}$ et le neurone $S_f$ ; et
f est la fonction sigmoïde.

Le neurone $S_f$ de la couche de sortie 36 délivre un signal de sortie compris entre 0 et 1. Ce signal est comparé dans un comparateur à une valeur de seuil Vs pour indiquer en cas de dépassement l'existence d'un raté de combustion. Cette valeur de seuil est par exemple égale à 0,5.

Les poids $w_{ij}$ et $W_i$ des neurones sont obtenus de façon classique lors d'une phase d'apprentissage à partir d'un ensemble heuristique stabilisé en charge du moteur CH et en régime moyen du moteur RPM. Ils sont calculés lors de la phase d'apprentissage par un algorithme d'optimisation de type quasi Newton ou de type Levenberg Marquardt. Les poids $w_{ij}$ et $W_i$ sont enregistrés dans une mémoire non volatile de type ROM non représentée du calculateur multifonctions du moteur 16 et représentent les données de calibration de l'algorithme.

Le système de détection 2 d'un raté de combustion comprend également un capteur de phasage des cylindres du moteur non représenté. Ce capteur est apte à envoyer au calculateur multifonctions du moteur 16 une information d'identification du cylindre en phase de détente. L'unité de calcul 28 est apte à corréler cette information avec l'information d'indication d'existence d'un raté de combustion émise par les moyens neuronaux 30 pour identifier le cylindre qui a engendré un raté de combustion.

En variante, plusieurs neurones peuvent être disposés dans le premier étage 38 de la couche cachée.

En variante également, plusieurs neurones peuvent être disposés dans le second étage 40 de la couche cachée.

En variante également, la couche de sortie 36 comprend un biais.

La figure 3 représente un second exemple de structure des moyens neuronaux 30 selon l'invention.

La couche d'entrée 32 du premier étage 38 comprend un neurone supplémentaire $S_{e0}$ qui reçoit en entrée un signal inverse du régime moyen du moteur 1/RPM dont le signe est variable en fonction de la position de la roue codée, c'est à dire essentiellement en fonction du segment angulaire utilisé pour la mesure. Le neurone $S_{e0}$ permet de compenser les dissymétries engendrées par les tolérances d'usinage des dents de la roue codée 18 et par son décentrage.

En variante, un autre neurone supplémentaire $S_{e0}$ reçoit en entrée un signal inverse du régime moyen du moteur au carré $1/RPM^2$ dont le signe est variable en fonction de la position de la roue codée.

En variante, la roue 18 du capteur de mesure de position angulaire 12 comprend un nombre différent de dents et définit un nombre différent d'informations élémentaires d'accélération $F_i$. Dans ce cas, le premier étage 38 de la couche d'entrée 32 des moyens neuronaux 30 comprend un nombre différent de neurones. Bien entendu, on peut aussi utiliser une roue codée d'un autre type.

En variante, on peut utiliser un segment angulaire différent, c'est à dire couvrant non pas une seule dent, mais plusieurs, et pouvant être par exemple égal à 12° ou 18°, etc.... L'homme du métier ajustera la taille du secteur angulaire pour diminuer le nombre de neurones de la couche d'entrée afin de simplifier les calculs tout en gardant une bonne précision de l'algorithme.

En variante également, un calculateur dédié à la fonction peut être utilisé à la place du calculateur multifonctions du moteur 16.

Le système de détection d'un raté selon l'invention peut être utilisé pour des moteurs de différents types à combustion interne et notamment pour des moteurs à essence ou Diesel, pour des moteurs à quatre ou à six cylindres. Cependant, les poids des neurones varient d'un véhicule à un autre et il est nécessaire de les déterminer par apprentissage pour un moteur donné et pour une gamme de véhicules donnée.

**Revendications**

1. Système de détection d'un raté de combustion (2) d'au moins un cylindre (3) d'un moteur thermique d'un véhicule automobile, comprenant:

   - des moyens d'acquisition d'informations de charge du moteur (14),
   - des moyens d'acquisition d'informations de vitesse (12, 18, 20) du vilebrequin,

- des moyens de calcul (28) du régime moyen de rotation du moteur à partir des informations de vitesse du vilebrequin,
- des moyens de détermination (26, 28) d'informations représentatives du couple indiqué du cylindre du moteur,
- des moyens neuronaux (30) de traitement des informations de charge du moteur, des informations représentatives du couple indiqué et des informations de régime moyen de rotation du moteur pour détecter un raté de combustion, **caractérisé en ce que** :

- les moyens de détermination d'informations représentatives du couple indiqué sont adaptés pour délivrer n informations élémentaires représentatives du couple indiqué correspondant à n pas de mesure successifs du couple indiqué générés lors d'une combustion dans un cylindre, et **en ce que**
- les moyens neuronaux comprennent un premier (38) et un second (40) étages neuronaux indépendants l'un de l'autre, le premier étage (38) recevant en entrée les n informations élémentaires représentatives du couple indiqué et le second étage (40) recevant en entrée les informations de charge du moteur et de régime moyen de rotation du moteur afin d'optimiser le traitement des informations et la détection d'un raté de combustion.

2. Système de détection d'un raté de combustion selon la revendication 1, **caractérisé en ce que** les moyens de détermination (26, 28) d'informations représentatives du couple indiqué comprennent des moyens de calcul (28) d'informations de fluctuation de la vitesse et **en ce que** les n informations élémentaires comprennent n informations de fluctuation de la vitesse, une information de fluctuation étant calculée à partir de la différence entre une vitesse du vilebrequin sur une course prédéfinie de rotation du vilebrequin et une vitesse du vilebrequin moyennée sur une course correspondant à un demi-tour de rotation du vilebrequin.

3. Système de détection d'un raté de combustion selon la revendication 1, **caractérisé en ce que** les moyens de détermination (26, 28) d'informations représentatives du couple indiqué comprennent un accéléromètre et **en ce que** les n informations élémentaires comprennent n informations d'accélération mesurées lors de la rotation du vilebrequin sur une course prédéterminée.

4. Système de détection d'un raté de combustion selon la revendication 1, **caractérisé en ce que** les moyens de détermination (26, 28) d'informations représentatives du couple indiqué comprennent un capteur de pression des gaz d'échappement du cylindre du moteur et **en ce que** les n informations élémentaires comprennent n informations de variation de la pression, une information de variation de la pression étant calculée à partir de la différence entre une pression d'échappement sur une course prédéfinie de rotation du vilebrequin et une pression d'échappement moyennée sur une course correspondant à un demi-tour de rotation du vilebrequin.

5. Système de détection d'un raté de combustion selon l'une quelconque des revendications précédentes, **caractérisé en ce que** les moyens d'acquisition d'informations de vitesse (12) du vilebrequin comprennent des moyens d'acquisition d'informations de la position angulaire du vilebrequin.

6. Système de détection d'un raté de combustion selon la revendication 5, **caractérisé en ce que** les moyens d'acquisition d'informations de vitesse et de position angulaire (12) du vilebrequin comprennent une roue codée (18) reliée au vilebrequin et une sonde correspondante (20).

7. Système de détection d'un raté de combustion selon l'une quelconque des revendications précédentes, **caractérisé en ce que** les moyens neuronaux (30) sont composés d'une couche (32) de neurones d'entrée, d'une unique couche de neurones cachée (34) et d'une couche de neurones de sortie (36).

8. Système de détection d'un raté de combustion selon la revendication 7, **caractérisé en ce que** le premier (38) et le second (40) étages comprennent chacun des neurones de la couche d'entrée (32) et de la couche cachée (34).

9. Système de détection d'un raté de combustion selon l'une quelconque des revendications précédentes, **caractérisé en ce que** les moyens neuronaux (30) sont statiques.

10. Système de détection d'un raté de combustion selon l'une quelconque des revendications 7 à 9 en combinaison avec la revendication 6, **caractérisé en ce que** le premier étage (38) reçoit en outre en entrée un signal inverse du régime moyen de rotation du moteur (1/RPM) dont le signe varie en fonction du segment angulaire de la roue codée utilisé pour faire la mesure dans le but d'en corriger la dissymétrie.

**11.** Système de détection d'un raté de combustion selon l'une quelconque des revendications 7 à 9 en combinaison avec la revendication 6, **caractérisé en ce que** le premier étage (38) reçoit en outre en entrée un signal inverse du régime moyen de rotation du moteur au carré ($1/RPM^2$) dont le signe varie en fonction du segment angulaire de la roue codée utilisé pour faire la mesure dans le but d'en corriger la dissymétrie.

**12.** Système de détection d'un raté de combustion selon l'une quelconque des revendications précédentes, **caractérisé en ce que** les moyens neuronaux (30) et les moyens de calcul (28) sont implantés dans un calculateur multifonctions du moteur (16).

**Claims**

**1.** System for detecting a combustion failure (2) of at least one cylinder (3) of a thermal engine of a motor vehicle, comprising:

- acquisition means for load data of the engine (14),
- acquisition means for speed data (12, 18, 20) of the crankshaft,
- means (28) for calculating the average engine speed from the crankshaft speed data,
- means (26, 28) for determining characteristic data of the indicated torque of the engine cylinder,
- neural means (30) for processing engine load data, characteristic data of the indicated torque and average engine speed data to detect a combustion failure,

**characterised in that**

- the means for determining characteristic data of the indicated torque are capable of delivering n basic characteristic data of the indicated torque corresponding to n successive measurement steps of the indicated torque generated during combustion in a cylinder, and that
- the neural means comprise a first (38) and a second (40) neural stage independent of one another, the first stage (38) receiving the n basic characteristic data of the indicated torque as input and the second stage (40) receiving the engine load data and average engine speed data as input in order to optimise the processing of the data and the detection of a combustion failure.

**2.** System for detecting a combustion failure according to Claim 1, **characterised in that** the means (26, 28) for determining characteristic data of the indicated torque comprise means (28) for calculating speed fluctuation data, and **in that** the n basic data include n speed fluctuation data, a fluctuation information being calculated from the difference between a crankshaft speed over a predefined course of rotation of the crankshaft and a crankshaft speed averaged over a course corresponding to a half-rotation of the crankshaft.

**3.** System for detecting a combustion failure according to Claim 1, **characterised in that** the means (26, 28) for determining characteristic data of the indicated torque comprise an acceleration meter, and **in that** the n basic data include n acceleration data measured during the rotation of the crankshaft over a predetermined course.

**4.** System for detecting a combustion failure according to Claim 1, **characterised in that** the means (26, 28) for determining characteristic data of the indicated torque comprise a pressure sensor for the exhaust gases of the engine cylinder, and **in that** the n basic data include n pressure variation data, a pressure variation information being calculated on the basis of the difference between an exhaust pressure over a predefined course of rotation of the crankshaft and an exhaust pressure averaged over a course corresponding to a half-rotation of the crankshaft.

**5.** System for detecting a combustion failure according to any one of the preceding claims, **characterised in that** the acquisition means (12) for crankshaft speed data include means for acquiring data of the angular position of the crankshaft.

**6.** System for detecting a combustion failure according to Claim 5, **characterised in that** the means for acquiring speed data and angular position data (12) of the crankshaft include a coded wheel (18) connected to the crankshaft and a corresponding sensor (20).

**7.** System for detecting a combustion failure according to any one of the preceding claims, **characterised in that** the neural means (30) are composed of an input neural layer (32), a single cached neural layer (34) and an output neural layer (36).

8. System for detecting a combustion failure according to Claim 7, **characterised in that** the first (38) and the second (40) stages each include neurons of the input layer (32) and of the cached layer (34).

9. System for detecting a combustion failure according to any one of the preceding claims, **characterised in that** the neural means (30) are static.

10. System for detecting a combustion failure according to any one of Claims 7 to 9 in combination with Claim 6, **characterised in that** the first stage (38) additionally receives as input an inverse signal of the average engine speed (1/RPM), of which the sign varies as a function of the angular segment of the coded wheel used to perform the measurement for the purpose of correcting the asymmetry thereof.

11. System for detecting a combustion failure according to any one of Claims 7 to 9 in combination with Claim 6, **characterised in that** the first stage (38) additionally receives as input an inverse signal of the average engine speed squared ($1/RPM^2$), of which the sign varies as a function of the angular segment of the coded wheel used to perform the measurement for the purpose of correcting the asymmetry thereof.

12. System for detecting a combustion failure according to any one of the preceding claims, **characterised in that** the neural means (30) and the calculation means (28) are installed in a multifunctional engine computer (16).

**Patentansprüche**

1. Anlage (2) zum Erfassen einer Fehlverbrennung wenigstens eines Zylinders (3) einer Brennkraftmaschine eines Kraftfahrzeugs mit:

- Einrichtungen (14) zum Gewinnen von Information über die Maschinenlast,
- Einrichtungen (12, 18, 20) zum Gewinnen von Informationen über die Geschwindigkeit der Kurbelwelle,
- Einrichtungen (28) zum Berechnen des mittleren Drehzahlbereiches der Maschine aus den Informationen über die Geschwindigkeit der Kurbelwelle,
- Einrichtungen (26, 28) zum Gewinnen von Informationen, die ein bestimmtes Moment des Zylinders der Maschine wiedergeben,
- Neuroeinrichtungen (30) zum Verarbeiten der Informationen über die Maschinenlast, der Informationen, die ein bestimmtes Moment wiedergeben und der Informationen über den mittleren Drehzahlbereich der Maschine, um eine Fehlverbrennung zu erfassen, **dadurch gekennzeichnet, dass**:

- die Einrichtungen zum Gewinnen von Informationen, die ein bestimmtes Moment wiedergeben, so ausgebildet sind, dass sie n Grundinformationen, die das bestimmte Moment wiedergeben, entsprechend n aufeinander folgenden Messschritten des bestimmten Momentes liefern können, die während einer Verbrennung in einem Zylinder vorgenommen werden, und dass
- die Neuroeinrichtungen eine erste Neurostufe (38) und eine zweite Neurostufe (40) umfassen, die voneinander unabhängig sind, wobei die erste Stufe (38) am Eingang die n Grundinformationen empfängt, die das bestimmte Moment wiedergeben, und die zweite Stufe (40) am Eingang die Informationen über die Maschinenlast und den mittleren Drehzahlbereich der Maschine empfangen, um die Verarbeitung der Informationen und die Erfassung einer Fehlverbrennung zu optimieren.

2. Anlage zum Erfassen einer Fehlverbrennung nach Anspruch 1, **dadurch gekennzeichnet, dass** die Einrichtungen (26, 28) zum Gewinnen von Informationen, die ein bestimmtes Moment wiedergeben, Einrichtungen (28) zum Berechnen von Informationen über die Schwankung der Geschwindigkeit umfassen und dass die n Grundinformationen n Informationen über die Schwankung der Geschwindigkeit umfassen, wobei eine Information über die Schwankung der Geschwindigkeit ausgehend vom Unterschied zwischen einer Geschwindigkeit der Kurbelwelle während eines vorgegebenen Drehweges der Kurbelwelle und einer mittleren Geschwindigkeit der Kurbelwelle während eines Weges berechnet wird, der einer halben Umdrehung der Kurbelwelle entspricht.

3. Anlage zum Erfassen einer Fehlverbrennung nach Anspruch 1, **dadurch gekennzeichnet, dass** die Einrichtung (26, 28) zum Gewinnen von Informationen, die ein bestimmtes Moment wiedergeben, einen Beschleunigungsmesser umfassen und dass die n Grundinformationen n Beschleunigungsinformationen umfassen, die während der Drehung der Kurbelwelle über einen bestimmten Weg gemessen werden.

4. Anlage zum Erfassen einer Fehlverbrennungen nach Anspruch 1, **dadurch gekennzeichnet, dass** die Einrichtung (26, 28) zum Gewinnen von Informationen, die ein bestimmtes Moment wiedergeben, einen Messfühler für den Druck des Abgases des Zylinders der Maschine umfassen und dass die n Grundinformationen n Informationen über die Änderung des Druckes umfassen, wobei eine Information über die Änderung des Druckes ausgehend von dem Unterschied zwischen einem Druck des Abgases während eines bestimmten Drehweges der Kurbelwelle und einem mittleren Druck des Abgases während eines Weges berechnet wird, der einer halben Umdrehung der Kurbelwelle entspricht.

5. Anlage zum Erfassen einer Fehlverbrennung nach einem der vorhergehenden Ansprüche, **dadurch gekennzeichnet, dass** die Einrichtungen (12) zum Gewinnen von Informationen über die Geschwindigkeit der Kurbelwelle Einrichtungen zum Gewinnen von Informationen über die Winkelposition der Kurbelwelle umfassen.

6. Anlage zum Erfassen einer Fehlverbrennung nach Anspruch 5, **dadurch gekennzeichnet, dass** die Einrichtungen (12) zum Gewinnen von Informationen über die Geschwindigkeit und die Winkelposition der Kurbelwelle ein Kodierungsrad (18), das mit der Kurbelwelle verbunden ist, und eine entsprechende Sonde (20) umfassen.

7. Anlage zum Erfassen einer Fehlverbrennung nach einer der vorhergehenden Ansprüche, **dadurch gekennzeichnet, dass** die Neuroeinrichtungen (30) aus einem Satz (32) von Eingangsneuronen, einem einzigen Satz (34) von verdeckten Neuronen und einem Satz (36) von Ausgangsneuronen gebildet sind.

8. Anlage zum Erfassen einer Fehlverbrennung nach Anspruch 7, **dadurch gekennzeichnet, dass** die erste Stufe (38) und die zweite Stufe (40) jeweils Neuronen des Eingangssatzes (32) und des verdeckten Satzes (34) umfassen.

9. Anlage zum Erfassen einer Fehlverbrennung nach einem der vorhergehenden Ansprüche, **dadurch gekennzeichnet, dass** die Neuroeinrichtungen (30) statisch sind.

10. Anlage zum Erfassen einer Fehlverbrennung nach einem der Ansprüche 7 bis 9 in Kombination mit Anspruch 6, **dadurch gekennzeichnet, dass** die erste Stufe (38) am Eingang zusätzlich ein zum mittleren Drehzahlbereich der Maschine umgekehrtes Signal (1/RPM) empfängt, dessen Vorzeichen in Abhängigkeit von dem Winkelsegment des Kodierungsrades variiert, das zur Durchführung der Messung verwandt wird, um die Dissymmetrie zu korrigieren.

11. Anlage zum Erfassen einer Fehlverbrennung nach einem der Ansprüche 7 bis 9 in Kombination mit Anspruch 6, **dadurch gekennzeichnet, dass** die erste Stufe (38) am Eingang zusätzlich ein zum mittleren Drehzahlbereich der Maschine im Quadrat umgekehrtes Signal ($1/RPM^2$) empfängt, dessen Vorzeichen in Abhängigkeit vom Winkelsegment des Kodierungsrades variiert, das zu Durchführung der Messung verwandt wird, um die Dissymmetrie zu korrigieren.

12. Anlage zum Erfassen einer Fehlverbrennung nach einem der vorhergehenden Ansprüche **dadurch gekennzeichnet, dass** die Neuroeinrichtungen (30) und die Einrichtungen (28) zum Berechnen in einen Multifunktionsrechner (16) der Maschine eingebaut sind.

**FIG.1**

*FIG.2*

*FIG.3*